# EUROPÄISCHE PATENTSCHRIFT

(11) **EP 0 943 525 B1**
(45) Veröffentlichungstag und Bekanntmachung des Hinweises auf die Patenterteilung: **04.09.2002**
(21) Anmeldenummer: 99102507.3
(22) Anmeldetag: 10.02.1999
(51) Int. Cl.: B62D 1/19, B62D 1/18

(54) **Lenksäulenanordnung für ein Kraftfahrzeug**
Steering column arrangement for a motor vehicle
Colonne de direction d'un véhicule automobile

(30) Priorität: 19.03.1998 DE 19812179
(43) Veröffentlichungstag der Anmeldung: 22.09.1999
(73) Patentinhaber: DaimlerChrysler AG, 70567 Stuttgart (DE)
(72) Erfinder: Link, Manfred, 71334 Waiblingen (DE)

(56) Entgegenhaltungen:
- DE-C- 19 524 196
- US-A- 3 813 961
- US-A- 5 141 248

## Beschreibung

Die Erfindung betrifft eine Lenksäulenanordnung für ein Kraftfahrzeug mit einem äußeren, ortsfest angeordneten Mantelrohr sowie mit einem teleskopförmig in dem äußeren Mantelrohr verschiebbaren inneren Mantelrohr und mit einer zwischen den beiden Mantelrohren wirksamen Verstellvorrichtung zur Verschiebung des inneren Mantelrohres innerhalb des äußeren Mantelrohres, die ein am inneren Mantelrohr ortsfest angreifendes, längserstrecktes und achsparallel zur Lenkachse ausgerichtetes Stellglied aufweist, wobei dem Stellglied Energieabsorptionsmittel zugeordnet sind.

Eine solche Lenksäulenanordnung gemäß den Oberbegriff des Anspruchs 1 ist aus der DE 195 24 196 C1 bekannt. Die bekannte Lenksäulenanordnung weist eine ein Lenkrad tragende Lenkspindel auf, die in einem inneren Mantelrohr drehbeweglich gelagert ist. Das innere Mantelrohr ist in einem äußeren Mantelrohr teleskopförmig verschiebbar gelagert, wobei das äußere Mantelrohr an der Karosserietragstruktur des Kraftfahrzeugs festgelegt ist. Zur Verschiebung des inneren Mantelrohres gegenüber dem äußeren Mantelrohr ist eine Verstellvorrichtung vorgesehen, die als durch einen Elektromotor betätigter Spindeltrieb gestaltet ist. Der Spindeltrieb weist eine achsparallel zur Lenkachse der Lenkspindel außen längs des äußeren und des inneren Mantelrohres verlaufende Stellspindel auf, die mittels einer Halterung an einem Stirnende ortsfest am inneren Mantelrohr festgelegt ist. Im Bereich des äußeren Mantelrohres sitzt auf der als Gewindespindel gestalteten Stellspindel eine Gewindemutter, die zwischen zwei energieabsorbierend gestalteten Lagerböcken gelagert ist. Auf die Gewindemutter wirkt über ein entsprechendes Zahnradgetriebe der elektrische Stellmotor. Bei einer Aufprallbelastung auf das Kraftfahrzeug kann zusätzliche Aufprallenergie im Bereich der Verstellvorrichtung aufgenommen werden, indem die energieabsorbierenden Lagerböcke durch die Krafteinleitung über die Stellspindel plastisch deformiert werden. Je nach der Richtung der Aufprallbelastung, d.h. vom Lenkgetriebe her oder vom Fahrzeuginnenraum und damit vom Lenkrad her, wirken somit auf die Stellspindel Zug- oder Druckbelastungen, die über die energieabsorbierenden Lagerböcke unter Energieaufnahme abgebaut werden können.

Aufgabe der Erfindung ist es, eine Lenksäulenanordnung der eingangs genannten Art zu schaffen, die mit einfachen Mitteln Aufprallenergie bei einem Fahrzeugaufprall aufnehmen kann.

Diese Aufgabe wird dadurch gelöst, daß das längserstreckte Stellglied mit einer Sollknickstelle versehen ist, und daß auf Höhe der Sollknickstelle ein ortsfest am inneren Mantelrohr angeordneter, die Sollknickstelle zumindest teilweise übergreifender Stützbügel vorgesehen ist, der plastisch verformbar gestaltet ist. Dadurch wird im Bereich der Verstellvorrichtung Aufprallenergie durch eine Verformung des Stellgliedes abgebaut, das einerseits am inneren Mantelrohr und andererseits am äußeren Mantelrohr angeordnet ist. Durch das Merkmal, daß das Stellglied im Bereich der Sollknickstelle zumindest teilweise von einem zusätzlich plastisch verformbaren Stützbügel übergriffen wird, wird dieser Stützbügel bei einer Deformation des Stellgliedes im Bereich der Sollknickstelle noch zusätzlich verformt, sobald die Sollknickstelle bei der Deformation an diesem Stützbügel zur Anlage kommt. Es ergibt sich somit eine Reihenschaltung der Energieabsorptionsmittel in Form der Sollknickstelle und des Stützbügels. Als Stellglied ist insbesondere eine Gewindespindel eines Spindeltriebs vorgesehen. Alternativ kann jedoch auch ein anderes Stellglied in Form eines Zug-/Druckstabes vorgesehen sein, der durch hydraulische oder pneumatische, hydraulische oder elektrische Antriebsglieder beaufschlagt ist. Durch die erfindungsgemäße Lösung erfolgt ein Abbau von Aufprallenergie zunächst durch eine Verformung des Stellgliedes im Bereich der Sollknickstelle, wobei die Anlage der Sollknickstelle an dem Stützbügel derart auf den Verformungsweg abgestimmt ist, daß die Anlage bereits nach geringem Abfall des Verformungskraftniveaus erfolgt. Durch die Anlage und die anschließende zusätzliche Verformung des Stützbügels erfolgt wieder ein Kraftanstieg des Verformungskraftniveaus, so daß weiterhin Aufprallenergie umwandelbar ist. Das Verformungskraftniveau kann daher über einen erheblich längeren Verschiebeweg zwischen dem inneren und äußeren Mantelrohr auf einem hohen Niveau gehalten werden, als dies beim ausschließlichen Vorsehen einer Sollknickstelle der Fall wäre.

In Ausgestaltung der Erfindung ist die Sollknickstelle des Stellgliedes derart winklig zum Stützbügel hin ausgerichtet, daß sie bei einem Ausknickvorgang zu einer Ansetzstelle des Stützbügels am Mantelrohr hin gelenkt wird. Dadurch wird verhindert, daß die Sollknickstelle an dem Stützbügel nach außen abgleitet, wodurch der Stützbügel keine Stützfunktion der Sollknickstelle mehr ausüben könnte.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt in einer Seitenansicht eine Ausführungsform einer erfindungsgemäßen Lenksäulenanordnung für einen Personenkraftwagen, wobei gestrichelt eine Verstellvorrichtung zwischen den beiden Mantelrohren in einer Crash-Stellung dargestellt ist,
- Fig. 2: einen Ausschnitt der Lenksäulenanordnung nach Fig. 1 in einer normalen Betriebsstellung der Verstellvorrichtung,
- Fig. 3: schematisch in einer Ansicht in Richtung des Pfeiles III in Fig. 2 die Ausrichtung einer Sollknickstelle einer Stellspindel der Verstellvorrichtung zu einem Stützbügel in der unbelasteten Ruheposition,
- Fig. 4: die ortsfeste Positionierung der Stellspindel nach den Fig. 1 bis 3 an einem Halter des inneren Mantelrohres der Lenksäulenanordnung nach den Fig. 1 und 2,
- Fig. 5: eine Stirnansicht der Lenksäulenanordnung nach Fig. 1 oder 4 in Richtung des Pfeiles V in Fig. 4, und
- Fig. 6: ein Kraft-Weg-Diagramm zur Verdeutlichung des Verformungskraftverlaufs des Stellgliedes und des Stützbügels über den Verschiebeweg des inneren Mantelrohres relativ zum äußeren Mantelrohr.

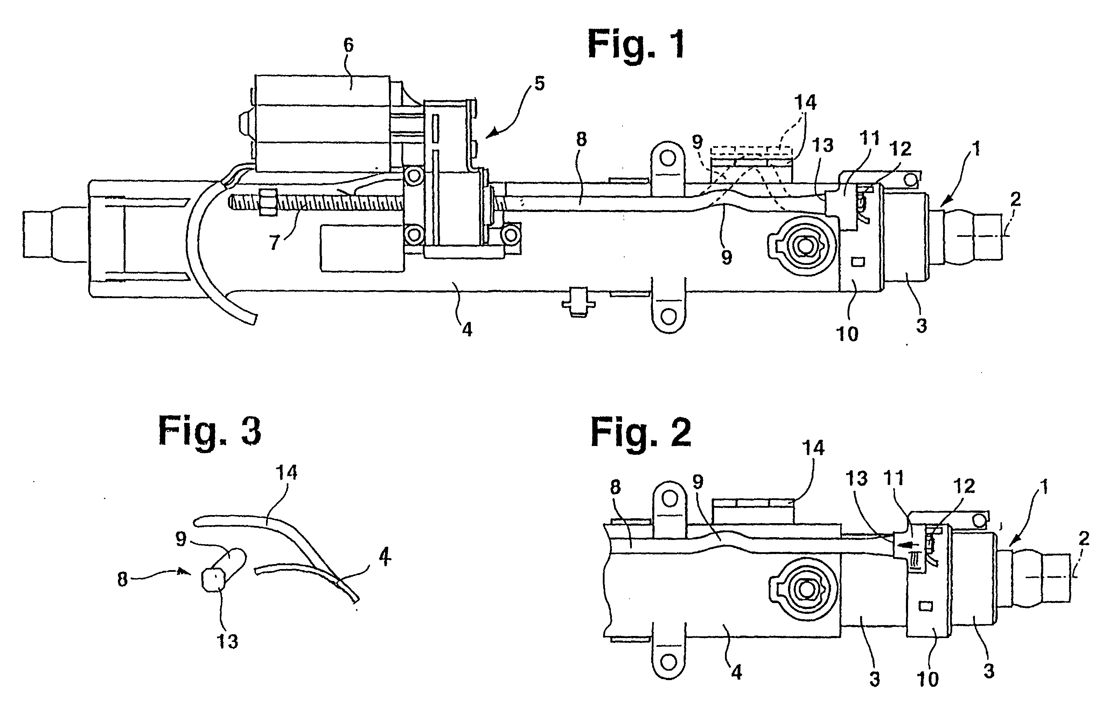

Eine Lenksäulenanordnung nach den Fig. 1 bis 5 ist Teil einer Lenkungsanlage eines Personenkraftwagens. Die Lenksäulenanordnung weist eine Lenkspindel 1 auf, die um eine Lenkachse 2 in einem inneren Mantelrohr 3 drehbeweglich gelagert ist. Ein in der Darstellung nach Fig. 1 rechtes Stirnende der Lenkspindel 1 dient zur Aufnahme eines Lenkrades. Das innere Mantelrohr 3 ist koaxial in einem äußeren Mantelrohr 4 teleskopförmig längsverschiebbar gelagert. Das äußere Mantelrohr 4 ist in an sich bekannter Weise ortsfest mit einer Karosserietragstruktur des Personenkraftwagens in einem Cockpit- oder Stirnwandbereich verbunden.

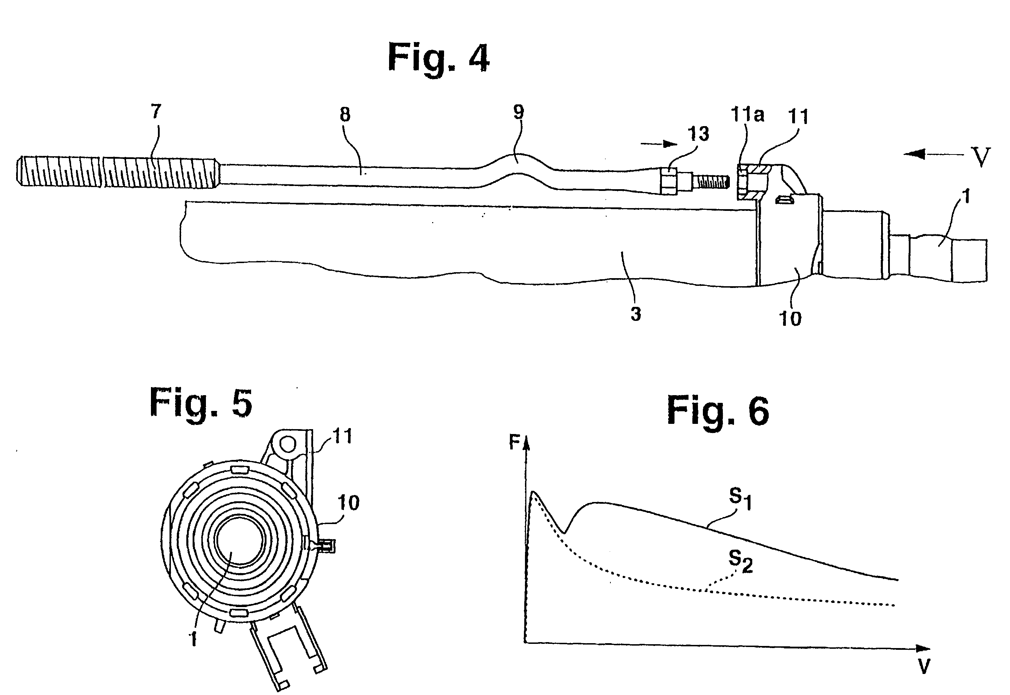

Um das innere Mantelrohr 3 relativ zu dem äußeren, ortsfesten Mantelrohr 4 teleskopförmig längs der Lenkachse 2 axial verschieben zu können, ist eine Verstellvorrichtung 5 vorgesehen, die als Spindeltrieb gestaltet ist. Der Spindeltrieb weist eine Stellspindel 7, 8, 9 auf, die achsparallel zu der Lenkachse 2 außen an dem äußeren Mantelrohr 4 verläuft und mittels eines vorderen Stirnendes verdrehgesichert in einer Halterung 11 einer ringförmigen Trägermanschette 10 festgelegt ist, die axial und drehfest auf dem Außenmantel des inneren Mantelrohres 3 fixiert ist. Zur verdrehgesicherten Festlegung der Stellspindel 7, 8, 9 in der Halterung 11 ist das zugehörige Stirnende der Stellspindel 7, 8, 9 mit einem Vierkantprofil 13 versehen, das verdrehgesichert in eine korrespondierende, viereckige Aufnahmeprofilierung 11a der Halterung 11 einsteckbar ist (siehe Pfeilrichtung in Fig. 4). Das das Vierkantprofil 13 tragende Stirnende der Stellspindel 7, 8, 9 ist mittels einer Befestigungsmutter 12 und einem entsprechenden Außengewindeabschnitt dieses Stirnendes axial in der Halterung 11 festgelegt. In Abstand zu dem das Vierkantprofil 13 aufweisenden Stirnende weist die Stellspindel 7, 8, 9 ein Außengewinde 7 auf, das mit einer in einem Gehäuse drehbeweglich gelagerten Gewindemutter der Verstellvorrichtung 5 in Eingriff steht. Die Gewindemutter ist stabil gelagert, so daß sie in axialer Richtung nicht ausweichen kann. Die Gewindemutter weist eine Außenverzahnung auf und ist über ein entsprechendes Zahnradgetriebe durch einen elektrischen Stellmotor 6 drehbar. Durch eine Drehung der Gewindemutter wird eine Axialverstellung der Stellspindel 7, 8, 9 erzielt. Das grundsätzliche Funktionsprinzip des Spindeltriebs entspricht dem aus der DE 195 24 196 C1 bekannten Spindeltrieb, so daß hierzu an dieser Stelle keine nähere Erläuterung mehr erforderlich ist.

Zwischen dem Außengewinde 7 und dem das Vierkantprofil 13 aufweisenden Stirnende der Stellspindel weist ein Zug-Druckstababschnitt 8 der Stellspindel 7, 8, 9 eine Sollknickstelle 9 auf, die durch eine bogenförmige Biegung des Zug-Druck-Stababschnittes 8 realisiert ist. Die Sollknickstelle 9 wird berührungslos von einem bogenförmig profilierten Stützbügel 14 übergriffen, der am Außenmantel des äußeren Mantelrohres 4 ansetzt und starr mit diesem verbunden ist. Der Stützbügel weist ein frei abragendes vorderes Stirnende auf, das die Stellspindel in Abstand berührungslos übergreift (Fig. 3), solange kein Ausknickvorgang erfolgt. Die gemäß den Fig. 1 und 2 erkennbare Breite des Stützbügels 14 entspricht der Länge des maximalen Verstellweges des inneren Mantelrohres 3 relativ zum äußeren Mantelrohr 4, so daß der Stützbügel 14 die Sollknickstelle 9 unabhängig von der jeweiligen Stellposition des inneren Mantelrohres 3 relativ zum äußeren Mantelrohr 4 übergreift.

Wie insbesondere anhand der Fig. 3 erkennbar ist, ist die Stellspindel 7, 8, 9 mit der Sollknickstelle 9 im montierten Zustand derart zum Stützbügel 14 ausgerichtet, daß sie bei einem Ausknickvorgang aufgrund einer Axialbelastung auf die Lenksäulenanordnung gemäß Fig. 1 nach der Anlage an der Innenseite des Stützbügels 14 zur Ansetzstelle des Stützbügels 14 (in der Darstellung nach Fig. 3 nach rechts) abgleitet und somit während des gesamten Verformungsvorganges von dem Stützbügel 14 eingefangen und unter Verformung des Stützbügels 14 durch diesen gestützt bleibt.

Sobald nun aufgrund eines Fahrzeugaufpralls auf das Mantelrohr 3, 4 eine Axialbelastung in der einen oder der anderen Richtung - abhängig von einer Einleitung der Aufprallenergie in das Lenkrad oder in ein Lenkgetriebe im Vorderachsbereich - aufgebracht wird, erfährt das Mantelrohr 3 relativ zum äußeren Mantelrohr 4 eine Verschiebung. Aufgrund der selbsthemmenden Gestaltung des Spindeltriebs setzt die Stellspindel 7, 8, 9 dieser Axialverschiebung einen Widerstand entgegen, der aufgrund der Höhe der Aufprallbelastung in einem Ausknicken der Sollknickstelle 9 resultiert. Die Verformungskraft steigt dabei bis zum Ausknicken der Sollknickstelle 9 gemäß der Darstellung nach Fig. 6 (Verformungskraft F) - auf den Verschiebungsweg V des inneren Mantelrohres 3 relativ zum äußeren Mantelrohr 4 bezogen - zunächst an und sinkt nach dem Ausknicken wieder ab. Da das Absinken des Verformungskraftniveaus gleichzeitig auch lediglich eine reduzierte Energieabsorption ermöglicht, ist ergänzend der Stützbügel 14 vorgesehen, der sich nach der Anlage der Sollknickstelle 9 aufgrund des Ausknickvorganges an seiner Innenseite ebenfalls plastisch verformt (siehe Aufbiegeweg, wie er anhand der Fig. 1 in gestrichelten Linien dargestellt ist). Beim Auftreffen der Sollknickstelle 9 auf den Stützbügel 14 erfolgt gemäß dem Verformungskraftverlauf S₁ nach Fig. 6 ein erneuter Kraftanstieg, wobei das Verformungskraftniveau gegenüber einem Ausknickvorgang ohne zusätzlichen Stützbügel (Kraft-Weg-Verlauf S₂) auf einem höheren Niveau verbleibt. Durch die zusätzliche plastische Verformung des Stützbügels 14, die durch das Auftreffen der Sollknickstelle 9 ausgelöst wird, ist somit eine erheblich höhere Absorption von Aufprallenergie erzielbar, als dies bei einem ausschließlich durch die Sollknickstelle 9 gebildeten Energieabsorptionsmittel der Fall wäre. Die Sollknickstelle 9 ist somit bezüglich der Energieabsorptionswirkung bei einem Fahrzeugaufprall mit dem Stützbügel 14 in Reihe geschaltet, indem zunächst die Sollknickstelle 9 und anschließend der Stützbügel 14 unter entsprechender Energieaufnahme plastisch verformt werden.

## Patentansprüche

1. Lenksäulenanordnung für ein Kraftfahrzeug mit einem äußeren, ortsfest angeordneten Mantelrohr (4) sowie mit einem teleskopförmig in dem äußeren Mantelrohr verschiebbaren inneren Mantelrohr (3) und mit einer zwischen den beiden Mantelrohren (3, 4) wirksamen Verstellvorrichtung (5) zur Verschiebung des inneren Mantelrohres (3) innerhalb des äußeren Mantelrohres (4), die ein am inneren Mantelrohr ortsfest angreifendes, längserstrecktes und achsparallel zur Lenkachse ausgerichtetes Stellglied (7, 8, 9) aufweist, wobei dem Stellglied Energieabsorptionsmittel zugeordnet sind,
**dadurch gekennzeichnet,**
**daß** das längserstreckte Stellglied (7, 8, 9) mit einer Sollknickstelle (9) versehen ist, und daß auf Höhe der Sollknickstelle (9) ein ortsfest am äußeren Mantelrohr (4) angeordneter, die Sollknickstelle zumindest teilweise übergreifender Stützbügel (14) vorgesehen ist, der plastisch verformbar gestaltet ist.

2. Lenksäulenanordnung nach Anspruch 1,
**dadurch gekennzeichnet,**
**daß** der Stützbügel am Außenmantel des äußeren Mantelrohres (4) ansetzt und die Sollknickstelle (9) bogenförmig übergreift.

3. Lenksäulenanordnung nach Anspruch 1 oder 2,
**dadurch gekennzeichnet,**
**daß** die Sollknickstelle (9) des Stellgliedes (7, 8, 9) derart winklig zum Stützbügel (14) hin ausgerichtet ist, daß sie bei einem Ausknickvorgang zu einer Ansetzstelle des Stützbügels (14) am Mantelrohr (4) hin gelenkt wird.

4. Lenksäulenanordnung nach einem der vorhergehenden Ansprüche,
**dadurch gekennzeichnet,**
**daß** das Stellglied als Gewindespindel (7, 8, 9) eines die Verstellvorrichtung (5) bildenden Spindeltriebs gestaltet ist.

## Claims

1. Steering column arrangement for a motor vehicle, with an external, fixed outer column (4) and an internal, telescopic inner column (3) that can be moved within the outer column, and with a displacement mechanism (5) that operates between the two columns (3, 4) to move the inner column (3) within the outer column (4), the said mechanism comprising a longitudinally extending positioning element (7, 8, 9) directed parallel to the steering axis and is in fixed engagement with the inner column, the positioning element being associated with energy absorption means,
**characterised in that**
the longitudinally extending positioning element (7, 8, 9) is provided with a predetermined bend point (9) and at the level of the predetermined bend point (9) a fixed support bracket (14) is positioned on the outer column (4), the said bracket surrounding the predetermined bend point at least partially and being able to be at least partially deformed.

2. Steering column arrangement according to Claim 1,
**characterised in that**
the support bracket is fixed on the external surface of the outer column (4) and is curved around the predetermined bend point (9).

3. Steering column arrangement according to Claims 1 or 2,
**characterised in that**
the predetermined bend point (9) of the positioning element (7, 8, 9) is directed at such an angle to the support bracket (14) that in the process of bending outwards it moves into a lodgement of the support bracket (14) on the outer column (4).

4. Steering column arrangement according to any of the preceding claims,
**characterised in that**
the positioning element (7, 8, 9) is designed as a spindle drive which forms the displacement mechanism (5).

## Revendications

1. Dispositif de colonne de direction pour un véhicule automobile, comportant un tube enveloppe extérieur (4) monté fixe ainsi qu'un tube enveloppe intérieur (3) pouvant être déplacé en translation de façon télescopique dans le tube enveloppe extérieur, et un dispositif de réglage (5) actif entre les deux tubes enveloppes (3, 4) pour déplacer le tube enveloppe intérieur (3) en translation à l'intérieur du tube enveloppe extérieur (4) et qui comporte un organe de réglage (7, 8, 9), qui est raccordé de façon fixe au tube enveloppe intérieur, s'étend longitudinalement et est orienté parallèlement à l'axe de direction, des moyens d'absorption d'énergie étant associés à l'organe de réglage, **caractérisé en ce que** l'organe de réglage (7, 8, 9), qui s'étend longitudinalement, comporte un point de coudage de consigne (9) et qu'à hauteur du point de coudage de consigne (9) est prévu un arceau d'appui (14), qui est monté fixe sur le tube enveloppe extérieur (4), s'engage au moins partiellement au-dessus du point de coudage de consigne et est agencé de manière à être déformable plastiquement.

2. Dispositif de colonne de direction selon la revendication 1, **caractérisé en ce que** l'arceau d'appui se rattache à l'enveloppe extérieure du tube enveloppe extérieur (4) et s'engage avec une forme arquée au-dessus du point de coudage de consigne (9).

3. Dispositif de colonne de direction selon la revendication 1 ou 2, **caractérisé en ce que** le point de coudage de consigne (9) de l'organe de réglage (7, 8, 9) est orienté angulairement en direction de l'arceau d'appui (4) de telle sorte que lors d'un processus de coudage, il soit dévié vers un point de rattachement de l'arceau d'appui (14) au tube enveloppe (4).

4. Dispositif de colonne de direction selon l'une des revendications précédentes, **caractérisé en ce que** l'organe de réglage est agencé sous la forme d'une broche filetée (7, 8, 9) d'un dispositif d'entraînement à broche constituant le dispositif de réglage (5).
